# EUROPÄISCHE PATENTSCHRIFT

(11) **EP 1 642 805 B1**
(45) Veröffentlichungstag und Bekanntmachung des Hinweises auf die Patenterteilung: **05.09.2007**
(21) Anmeldenummer: 05021020.2
(22) Anmeldetag: 27.09.2005
(51) Int. Cl.: B62D 1/06

(54) **Beheizbares Lenkrad**
Heatable steering wheel
Volant chauffant

(30) Priorität: 30.09.2004 DE 202004015234 U
(43) Veröffentlichungstag der Anmeldung: 05.04.2006
(73) Patentinhaber: TRW Automotive Safety Systems GmbH, 63743 Aschaffenburg (DE)
(72) Erfinder: Kreuzer, Martin, 63839 Kleinwallstadt (DE); Isensee, Jan, 61118 Bad Vibel (DE); Binder, Robert, 63517 Rodenbach (DE); Stricker, Christian, 57587 Birken-Honigsessen (DE)
(74) Vertreter: Kitzhofer, Thomas

(56) Entgegenhaltungen:
- EP-A- 0 985 590
- DE-A1- 10 004 501
- DE-A1- 10 138 118
- US-A1- 2002 008 097
- US-B1- 6 509 552

## Beschreibung

Die Erfindung betrifft ein beheizbares Lenkrad.

Im Rahmen der Bemühungen zur Verbesserung des Komforts für Kraftfahrzeugbenutzer werden u.a. beheizbare Lenkräder angeboten, um den wichtigsten Griffbereich des Lenkrades, d.h. den Lenkradkranz, auf eine haptisch angenehme Temperatur bringen zu können. Der Lenkradkranz weist heutzutage aus Designgründen oft zwei unterschiedliche sichtbare Ummantelungen auf, die aneinander anstoßen, beispielsweise Holz und Leder. Da die Holzummantelung im montierten Zustand an den Kanten nachgearbeitet werden muß, ist die Gefahr einer Verletzung oberflächennah verlegter Heizdrähte oder Heizmatten gegeben. Derzeit ist eine Lösung dieses Problems durch die Verwendung mehrerer Heizmatten bekannt. Die einzelnen Heizmatten sind im Stoßbereich der Ummantelungen beabstandet und müssen entweder nachträglich miteinander verbunden werden oder benötigen jeweils eine separate Stromzuführung. Ein Beispiel zeigt die US 2002 0008097 A1.

Aufgabe der Erfindung ist es, eine preiswertere und technisch vorteilhaftere Bauweise im Stoßbereich zweier Ummantelungen eines beheizbaren Lenkrads zu finden.

Erfindungsgemäß wird dies durch ein beheizbares Lenkrad erreicht, mit einem Lenkradrohling, der von einer Heizmatte umwickelt ist, einer ersten sichtbaren, an der Oberfläche im montierten Zustand nachgearbeiteten, harten Ummantelung und einer zweiten sichtbaren, weicheren Ummantelung, die aneinander anstoßen, wobei in deren Stoßbereich ein Koppelelement liegt, das von außen gesehen eine Vertiefung hat und sich von der ersten Ummantelung aus unter dem Stoßbereich bis unter den stoßseitigen Rand der zweiten Ummantelung erstreckt und wobei sich die Heizmatte unter der ersten Ummantelung und unter dem Koppelelement bis unter die zweite Ummantelung durchgehend erstreckt.

Das Koppelelement mit der Vertiefung ermöglicht die Nachbearbeitung der harten Ummantelung, z.B. einer Holzapplikation. Gleichzeitig schützt das Koppelelement die oberflächennah verlegte Heizmatte vor einer Beschädigung. Eine Beabstandung der Heizmatten im Stoßbereich der Ummantelungen ist somit nicht mehr nötig.

Die Heizmatte kann einteilig sein, d.h. den gesamten Lenkradkranz umwickeln. Dies bietet den Vorteil, daß nur eine Stromzuführung notwendig ist und nicht einzelne Heizmatten miteinander verbunden werden müssen.

In einer Ausführungsform liegt die Heizmatte an der Unterseite des Koppelelementes an. Damit ist die Heizmatte zum einen geschützt, kann aber zum anderen durch die oberflächennahe Anordnung die Ummantelungen des Lenkradkranzes rasch erwärmen.

Die gestoßenen Ummantelungen können direkt in das Koppelelement übergehen oder an ihm anliegen. Optisch unerwünschte Unterschiede einer Spaltbreite im Bereich des Stoßes der Ummantelungen werden vermieden. Die Spaltbreite ist durch das Koppelelement genau festlegbar.

In einer weiteren Ausführungsform liegt unterhalb der zweiten Ummantelung eine Ausgleichsschicht, die an das Koppelelement angrenzt. Das Koppelelement bildet somit einen Anschlagpunkt für die Ausgleichsschicht und erlaubt eine einfachere Verarbeitung des Ausgleichsmaterials.

In einer besonderen Ausführungsform wird das Koppelelement durch ein separates ringförmiges Teil gebildet. Dieses separate Teil ist in der Herstellung sehr preiswert und macht eine Änderung der weiteren, bekannten Lenkradbauteile überflüssig.

Das ringförmige Teil kann in dieser Ausführungsform eine Spange sein. Dies bietet den Vorteil, daß die zweite weichere Ummantelung durch die Spange befestigt wird.

In einer weiteren bevorzugten Ausführungsform ist das Koppelelement einstückig mit der ersten Ummantelung ausgebildet. Damit kann die Anzahl der Einzelbauteile klein gehalten werden.

Vorzugsweise ist die erste sichtbare Ummantelung eine Holzapplikation. Gerade bei einer Ummantelung aus Holz ist eine Nachbearbeitung der Stoßkante nötig und der Schutz durch das Koppelelement besonders vorteilhaft.

Die zweite sichtbare Ummantelung kann ein Leder sein. Der stoßseitige Rand des Leders ist in einer Ausführungsform abgewinkelt und erstreckt sich in die Vertiefung des Koppelelements. Durch diese Maßnahme ist der Stoßbereich der Ummantelungen optisch einwandfrei ausgebildet.

In einer weiteren Ausführungsform weist der Lenkradrohling ein Lenkradskelett und eine Umschäumung auf, wobei die Umschäumung eine Einbuchtung zur Aufnahme des Koppelelements hat. Das Koppelelement mit der Vertiefung ist durch diese Maßnahme nach einer Montage der Ummantelungen an der Lenkradoberfläche nicht mehr sichtbar.

Die Einbuchtung kann gegenüberliegende Seitenwände haben, an denen das Koppelelement anliegt. Dies bietet den Vorteil, daß das Koppelelement in Umfangsrichtung des Lenkradkranzes positioniert ist.

Weitere Merkmale und Vorteile der Erfindung ergeben sich aus der nachfolgenden Beschreibung und den nachfolgenden Zeichnungen, auf die Bezug genommen wird. In den Zeichnungen zeigen:
- Figur 1 eine Draufsicht auf einen Ausschnitt eines erfindungsgemäßen beheizbaren Lenkrads;
- Figur 2 einen Schnitt entlang der Linie II-II aus Figur 1 in einer ersten Ausführungsform;
- Figur 3 einen Schnitt entlang der Linie II-II aus Figur 1 in einer zweiten Ausführungsform; und
- Figur 4 einen Querschnitt des Lenkradkranzes entlang der Linie IV-IV in Figur 1.

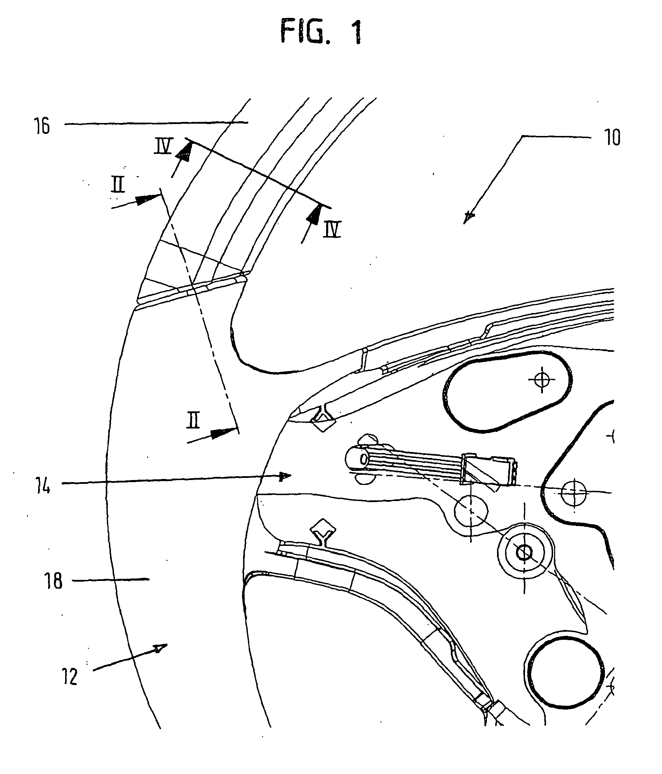

Die Figur 1 zeigt ein beheizbares Lenkrad 10 im Übergangsbereich von einem Lenkradkranz 12 und einer Speiche 14. Etwas oberhalb der Speiche 14 stößt eine erste sichtbare, an der Oberfläche im montierten Zustand nachgearbeitete, harte Ummantelung des Lenkradkranzes 12 an eine zweite sichtbare, weichere Ummantelung an. Die erste Ummantelung ist in diesem Fall eine Holzapplikation oder eine Holzummantelung 16, die zweite Ummantelung ist eine Lederummantelung 18.

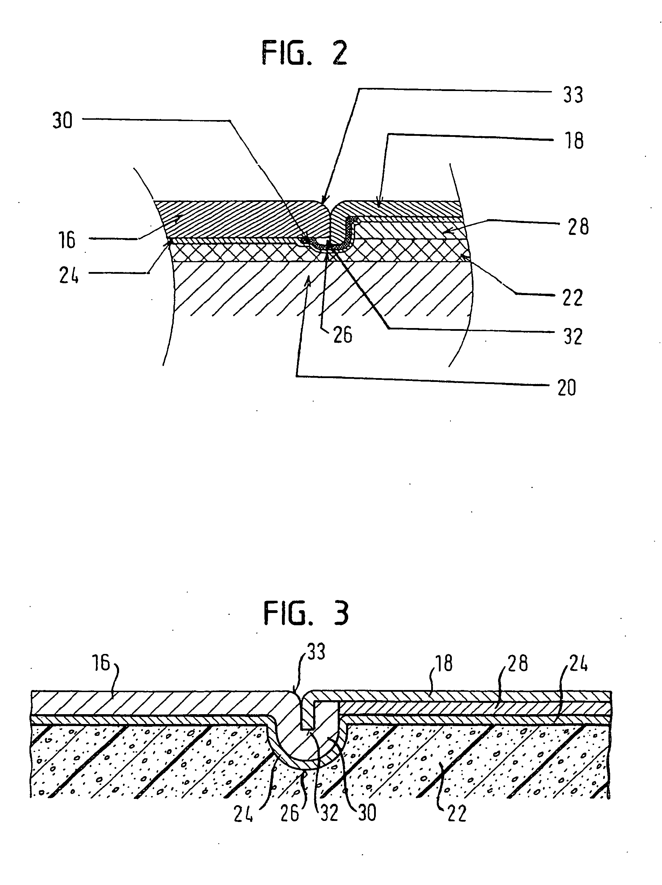

In der Figur 2 ist eine erste Ausführungsform des Stoßbereichs der Ummantelungen 16, 18 zu sehen. Im Inneren des Lenkradkranzes 12 befindet sich das Lenkradskelett 20, das von einer Umschäumung 22 umgeben ist. Das Lenkradskelett 20 und die Umschäumung 22 bilden einen Lenkradrohling. Im Bereich der Holzummantelung 16 ist der Lenkradrohling mit einer einteiligen Heizmatte 24 umwickelt. Im Stoßbereich der Ummantelungen 16, 18 weist die Umschäumung 22 eine Einbuchtung 26 auf. Auch in diesem Bereich umwickelt die Heizmatte 24 den Lenkradrohling und liegt direkt an der Umschäumung 22 an. Im Bereich der Lederummantelung 18 umwickelt die Heizmatte 24 den Lenkradrohling, ist allerdings durch eine Ausgleichsschicht 28 von der Umschäumung 22 beabstandet. Die Ausgleichsschicht 28 ist in diesem Fall eine Weichschaumeinlage, die zum einen für ein besseres Griffempfinden im Bereich der Lederummantelung 18 sorgt, und zum anderen unterschiedliche Ummantelungsstärken der Ummantelungen 16, 18 ausgleicht. Der Einbuchtung 26 im Stoßbereich der Ummantelungen 16, 18 ist ein Koppelelement 30 in Form eines separaten ringförmigen Teils angepaßt. Zwischen der Einbuchtung 26 und dem ringförmigen Teil befindet sich die Heizmatte 24, die an der Einbuchtung 26 und an der Unterseite des Koppelelements 30 sowie an den Ummantelungen 16, 18 anliegt.

Das ringförmige Teil ist in Figur 2 im Querschnitt zu sehen und als Spange ausgebildet. Es umgibt den Lenkradrohling ringförmig. Als äußere Schichten des Lenkradkranzes 12 folgen nun die Holzummantelung 16 bzw. die Lederummantelung 18. Diese beiden Ummantelungen 16, 18 stoßen im Bereich einer, von außen gesehenen Vertiefung 32 des Koppelelements 30 aneinander. Das Koppelelement 30 verläuft vom stoßseitigen Rand der Holzummantelung 16 bis zum stoßseitigen Rand der Lederummantelung 18. Die Holzummantelung 16 wird vor der Lederummantelung 18 aufgebracht. In der Regel muß eine Kante 33 der Holzummantelung 16 nachbearbeitet, d.h. geschliffen werden. Im Bereich dieser Kante 33 ist die Heizmatte 24 durch das ringförmige Teil geschützt und kann durch die Nachbearbeitung der Kante 33 nicht beschädigt werden. Die Lederummantelung 18 wird nach der Bearbeitung der Kante 33 angebracht und am stoßseitigen Rand des Leders abgewinkelt, so daß sie sich in die Vertiefung 32 erstreckt. Das abgewinkelte Leder liegt dann am stoßseitigen Rand der Holzummantelung 16 und an einer Innenseite der Vertiefung 32 des Koppelelements 30 an. Da das Koppelelement 30 als Spange ausgebildet ist, wird das abgewinkelte Leder in dieser Lage durch Klemmung festgehalten. Eine anderweitige Befestigung durch Kleben etc. ist ebenso denkbar.

Figur 3 zeigt eine zweite Ausführungsform des Koppelelements 30 des erfindungsgemäßen Lenkrads 10. Der Schichtaufbau vom Inneren des Lenkrads 10 zu seiner Oberfläche ist ähnlich dem aus Figur 2. Der Lenkradrohling weist im Schnitt der Figur 3 wieder die Einbuchtung 26 zur Aufnahme des Koppelelements 30 auf und ist komplett von der einteiligen Heizmatte 24 umwickelt. Die Einbuchtung 26 hat gegenüberliegende Seitenwände, an denen die Heizmatte 24 anliegt. Das Koppelelement 30 ist in dieser Ausführungsform einstückig mit der ersten Ummantelung, also der Holzummantelung 16, ausgebildet. Die gestoßenen Ummantelungen 16, 18 gehen somit direkt in das Koppelelement 30 über (Holzummantelung 16) oder liegen am stoßseitigen Rand mit der Unterseite an ihm an (Lederummantelung 18). Die Ausgleichsschicht 28 ist, im Unterschied zur Figur 2, in der Figur 3 zwischen der Lederummantelung 18 und der Heizmatte 24 angeordnet. Durch diese Maßnahme wird eine bessere Wärmeverteilung im Bereich der Lederummantelung 18 erreicht und verhindert, daß eine für die dickere Holzummantelung 16 notwendige Heizleistung der einteiligen Heizmatte 24 die Oberfläche des Lenkradkranzes 12 im Bereich der dünneren Lederummantelung 18 zu stark erhitzt. Die im Schnitt der Figur 3 unterhalb der Lederummantelung 18 liegende Ausgleichsschicht 28 grenzt an das Koppelelement 30 an. Der stoßseitige Rand des Leders der Lederummantelung 18 ist wie in der ersten Ausführungsform abgewinkelt und erstreckt sich in die Vertiefung 32, die durch das Koppelelement 30 gebildet wird. Die Lederummantelung 18 wird in dieser Vertiefung geklemmt, verklebt oder anderweitig befestigt.

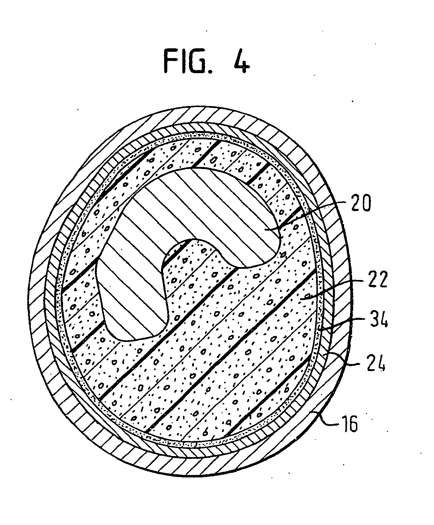

Die Figur 4 zeigt einen Querschnitt durch den Lenkradkranz 12 im Bereich der Holzummantelung 16. Der Schichtaufbau des Lenkradkranzes 12 wird hier noch einmal verdeutlicht. Im Inneren des Lenkradkranzes 12 befindet sich das Lenkradskelett 20, umgeben von der Umschäumung 22, die zusammen mit dem Lenkradskelett 20 den Lenkradrohling bilden. Am Lenkradrohling ist durch einen Kleber 34 die Heizmatte 24 befestigt. Die Heizmatte 24 ist wiederum von einer Holzschale umgeben, die gleichzeitig auch die Oberfläche des Lenkradkranzes 12 bildet.

## Patentansprüche

1. Beheizbares Lenkrad (10), mit einem Lenkradrohling, der von einer Heizmatte (24) umwickelt ist, einer ersten sichtbaren, an der Oberfläche im montierten Zustand nachgearbeiteten, harten Ummantelung und einer zweiten sichtbaren, weicheren Ummantelung, die aneinander anstoßen, wobei in deren Stoßbereich ein Koppelelement (30) liegt, das von außen gesehen eine Vertiefung (32) hat und sich von der ersten Ummantelung aus unter dem Stoßbereich bis unter den stoßseitigen Rand der zweiten Ummantelung erstreckt und wobei sich die Heizmatte (24) unter der ersten Ummantelung und unter dem Koppelelement (30) bis unter die zweite Ummantelung durchgehend erstreckt.

2. Beheizbares Lenkrad (10) nach Anspruch 1, **dadurch gekennzeichnet, daß** die Heizmatte (24) einteilig ist.

3. Beheizbares Lenkrad (10) nach einem der vorhergehenden Ansprüche, **dadurch gekennzeichnet, daß** die Heizmatte (24) an der Unterseite des Koppelelements (30) anliegt.

4. Beheizbares Lenkrad (10) nach einem der vorhergehenden Ansprüche, **dadurch gekennzeichnet, daß** die gestoßenen Ummantelungen direkt in das Koppelelement (30) übergehen oder an ihm anliegen.

5. Beheizbares Lenkrad (10) nach einem der vorhergehenden Ansprüche, **dadurch gekennzeichnet, daß** unterhalb der zweiten Ummantelung eine Ausgleichsschicht (28) liegt, die an das Koppelelement (30) angrenzt.

6. Beheizbares Lenkrad (10) nach einem der vorhergehenden Ansprüche, **dadurch gekennzeichnet, daß** das Koppelelement (30) durch ein separates ringförmiges Teil gebildet wird.

7. Beheizbares Lenkrad (10) nach Anspruch 6, **dadurch gekennzeichnet, daß** das ringförmige Teil eine Spange ist.

8. Beheizbares Lenkrad (10) nach einem der Ansprüche 1 bis 5, **dadurch gekennzeichnet, daß** das Koppelelement (30) einstückig mit der ersten Ummantelung ausgebildet ist.

9. Beheizbares Lenkrad (10) nach einem der vorhergehenden Ansprüche, **dadurch gekennzeichnet, daß** die erste sichtbare Ummantelung eine Holzapplikation ist.

10. Beheizbares Lenkrad (10) nach einem der vorhergehenden Ansprüche, **dadurch gekennzeichnet, daß** die zweite sichtbare Ummantelung ein Leder ist.

11. Beheizbares Lenkrad (10) nach Anspruch 10, **dadurch gekennzeichnet, daß** der stoßseitige Rand des Leders abgewinkelt ist und sich in die Vertiefung (32) erstreckt.

12. Beheizbares Lenkrad (10) nach einem der vorhergehenden Ansprüche, **dadurch gekennzeichnet, daß** der Lenkradrohling ein Lenkradskelett (20) und eine Umschäumung (22) aufweist, wobei die Umschäumung (22) eine Einbuchtung (26) zur Aufnahme des Koppelelements (30) hat.

13. Beheizbares Lenkrad (10) nach Anspruch 12, **dadurch gekennzeichnet, daß** die Einbuchtung (26) gegenüberliegende Seitenwände hat, an denen die Heizmatte (24) anliegt.

## Claims

1. A heatable steering wheel (10) comprising a steering wheel blank, a heating mat (24) being wrapped around the steering wheel blank, a first visible hard sheathing the surface of which is refinished after having been installed, and a second visible softer sheathing, both of the sheathings abutting each other, in the abutting area a coupling element (30) being placed that, as seen from the outside, has a depression (32) and that, starting from the first sheathing, extends under the abutting area to under the abutting edge of the second sheathing, and the heating mat (24) extending continuously under the first sheathing and under the coupling element (30) to under the second sheathing.

2. The heatable steering wheel (10) according to claim 1, **characterized in that** the heating mat (24) is in one piece.

3. The heatable steering wheel (10) according to any of the preceding claims, **characterized in that** the heating mat (24) lies against a bottom of the coupling element (30).

4. The heatable steering wheel (10) according to any of the preceding claims, **characterized in that** the abutting sheathings make a direct transition into the coupling element (30) or lie against it.

5. The heatable steering wheel (10) according to any of the preceding claims, **characterized in that** an equalization layer (28) arranged adjacent to the coupling element (30) is provided under the second sheathing.

6. The heatable steering wheel (10) according to any of the preceding claims, **characterized in that** the coupling element (30) is formed by a separate annular part.

7. The heatable steering wheel (10) according to Claim 6, **characterized in that** the annular part is a clasp.

8. The heatable steering wheel (10) according to any of claims 1 to 5, **characterized in that** the coupling element (30) is formed in one piece with the first sheathing.

9. The heatable steering wheel (10) according to any of the preceding claims, **characterized in that** the first visible sheathing is a wood applique.

10. The heatable steering wheel (10) according to any of the preceding claims, **characterized in that** the second visible sheathing is a leather.

11. The heatable steering wheel (10) according to claim 10, **characterized in that** the abutting edge of the leather is bent and extends into the depression (32).

12. The heatable steering wheel (10) according to any of the preceding claims, **characterized in that** the steering wheel blank comprises a steering wheel skeleton (20) and a foam covering (22), the foam covering (22) having an indentation (26) that serves to receive the coupling element (30).

13. The heatable steering wheel (10) according to claim 12, **characterized in that** the indentation (26) has opposing side walls against which the heating mat (24) lies.

## Revendications

1. Volant de direction chauffant (10), comportant une ébauche de volant de direction qui est entourée d'une enveloppe chauffante (24), une première gaine visible dure, retouchée en surface à l'état de montage, et une deuxième gaine visible plus souple, lesquelles gaines viennent en bout à bout, et dans leur zone d'aboutement est situé un élément de couplage qui, vu depuis l'extérieur, a un renfoncement (32) et s'étend en continu depuis la première gaine au-dessous de la zone d'aboutement jusqu'au-dessous du bord, côté aboutement, de la deuxième gaine et sous l'élément de couplage (30) jusqu'au-dessous de la deuxième gaine.

2. Volant de direction chauffant (10) selon la revendication 1, **caractérisé en ce que** l'enveloppe chauffante (24) est en une seule pièce.

3. Volant de direction chauffant (10) selon l'une des revendications précédentes, **caractérisé en ce que** l'enveloppe chauffante (24) est en appui sur la face inférieure de l'élément de couplage (30).

4. Volant de direction chauffant (10) selon l'une des revendications précédentes, **caractérisé en ce que** les gaines aboutées passent directement dans l'élément de couplage (30) ou sont en appui sur celui-ci.

5. Volant de direction chauffant (10) selon l'une des revendications précédentes, **caractérisé en ce qu'**au-dessous de la deuxième gaine se trouve une couche de compensation (28) qui est adjacente à l'élément de couplage (30).

6. Volant de direction chauffant (10) selon l'une des revendications précédentes, **caractérisé en ce que** l'élément de couplage (30) est formé par une partie annulaire séparée.

7. Volant de direction chauffant (10) selon la revendication 6, **caractérisé en ce que** la partie annulaire est une agrafe.

8. Volant de direction chauffant (10) selon l'une des revendications 1 à 5, **caractérisé en ce que** l'élément de couplage (30) est réalisé d'un seul tenant avec la première gaine.

9. Volant de direction chauffant (10) selon l'une des revendications précédentes, **caractérisé en ce que** la première gaine visible est une application en bois.

10. Volant de direction chauffant (10) selon l'une des revendications précédentes, **caractérisé en ce que** la deuxième gaine visible est un cuir.

11. Volant de direction chauffant (10) selon la revendication 10, **caractérisé en ce que** le bord du cuir, côté aboutement, est coudé et s'étend dans le renfoncement (32).

12. Volant de direction chauffant (10) selon l'une des revendications précédentes, **caractérisé en ce que** l'ébauche de volant de direction présente un squelette de volant de direction (20) et un moussage (22), le moussage (22) possédant un creux (26) pour recevoir l'élément de couplage (30).

13. Volant de direction chauffant (10) selon la revendication 12, **caractérisé en ce que** le creux (26) possède des parois latérales opposées sur lesquelles l'enveloppe chauffante (24) est en appui.
